# EUROPEAN PATENT SPECIFICATION

(11) **EP 4 420 632 B1**
(45) Date of publication and mention of the grant of the patent: **22.04.2026**
(21) Application number: 24158626.2
(22) Date of filing: 20.02.2024
(51) Int. Cl.: A61C 7/00, A61C 7/10, A61C 7/12

(54) **ORTHODONTIC DEVICE AND ORTHODONTIC KIT FOR TREATING MALOCCLUSIONS**
ORTHODONTISCHE VORRICHTUNG UND ORTHODONTISCHES KIT ZUR BEHANDLUNG VON MALOKKLUSIONEN
DISPOSITIF ORTHODONTIQUE ET KIT ORTHODONTIQUE POUR LE TRAITEMENT DE MALOCCLUSIONS

(30) Priority: 21.02.2023 IT 202300002970
(43) Date of publication of application: 28.08.2024
(73) Proprietor: Orthodontic Manufacturer SIA S.r.l., 00147 Roma (RM) (IT)
(72) Inventor: ANTIGNANO, Giuseppe, 8860 Montauro (CZ) (IT); SIRIANNI, Carlo Alessandro, 88021 Borgia (CZ) (IT)
(74) Representative: Gallo, Luca

(56) References cited:
- CN-A- 114 767 298
- US-A1- 2020 085 539
- US-A1- 2020 146 782
- US-A1- 2020 163 742
- US-A1- 2022 192 791

## Description

### Field of application

The present invention regards an orthodontic device and an orthodontic kit for treating malocclusions.

The orthodontic device and the orthodontic kit, object of the invention, are advantageously employable in the treatment of dental malocclusions, in particular in mandibular skeletal correction, so as to remedy Class II malocclusions, and advantageously also Class III malocclusions, of a patient and to obtain a correct ratio between the teeth of the maxilla and the teeth of the mandible.

Therefore, the present orthodontic device and orthodontic kit are inserted in the industrial field of production of orthodontics apparatuses and devices, in particular distalizers for treating the Class II malocclusion and advantageously also Class III malocclusion.

### State of the art

Devices are known in the orthodontics field that are used for restoring dental equilibrium in the case of malocclusion in a patient, i.e. with an irregular ratio between the teeth of the maxilla and those of the mandible which generates an imperfect occlusion of the dental arches. The latter indeed must generally be corrected since it can be the cause of functional or morphological (structural) disharmony, such to also negatively affect other anatomic sites of the patient.

For example, Class II malocclusion is known, also termed retrognathism, characterized by a mandibular deficit and/or upper maxillary excess. More in detail, in such pathology the upper arch overlies, in a considerable and evident manner, the teeth of the lower arch, with lower molars positioned distally with respect to the upper molars and projecting upper incisors. The chin tends to recede and, generally, the interdental space of the upper incisor teeth, like that of the lower incisors, is quite pronounced. In addition, in some cases there can also be a dental overcrowding.

Also known is Class III malocclusion, also termed prognathism, which, to the contrary
of Class II malocclusion, is characterized by an upper maxillary deficit and/or
mandibular excess. In other words, such pathology is verified when the teeth present on the mandibular arch are advanced with respect to those of the maxillary arch.

As anticipated above, for the purpose of correct the malocclusions, and in particular Class II malocclusion, various orthodontic devices have ideated for distalization, termed in the jargon "distalizers".

For example, the orthodontic device described in the patent EP 1433435 is known. Such device comprises a support body, which is fixed on a molar of an upper arch of the mouth of the patient.

In addition, the device comprises a spacer bar connected with a first end to the support body and fixed with an opposite second end to a canine of the upper arch.

In particular, the spacer bar comprises on the first end a spherical hinging portion, inserted within a housing seat made on the support body, and on the second end an end portion, fixed to the aforesaid canine and comprising a hook for coupling, by means of an intermaxillary elastic band, the spacer bar itself to a tensioning plate fixed to a molar of the lower arch.

In addition, the spacer bar comprises an elongated central portion, extended between the first and the second end, in order to distribute to the upper molar the mesiodistal component of the elastic force generated by the intermaxillary elastic band taut between the lower molar and the upper canine.

In this manner, the upper arch is thrust in a distal direction, while the lower arch is thrust in a mesial direction, leading to an enlargement of the mandible along with a containment of the maxilla and hence correcting the malocclusion.

The orthodontic device described up to now has proven in practice that it does not lack drawbacks.

A first drawback is given by the fact that the spherical articulation created by the hinging portion and the housing seat of the support body generates an excessive freedom of rotation of the two components in an occlusogingival direction. Such freedom of rotation is necessary for the purpose of allowing an increased maneuverability during the fixing of the end portion of the spacer bar to the upper canine, since the latter is generally sold already associated with the support body.

In addition, such freedom of rotation allows executing possible modifications in the event in which the support body is fixed in an incorrect manner on the upper molar.

Nevertheless, this aspect ensures that only the mesiodistal component of the force that acts on the upper canine is transmitted to the upper molar, while the occlusogingival component is exclusively or mainly absorbed by the upper canine. Generally, one risks obtaining on the patient the undesired effect of generating the extrusion of the canine.

A further drawback is given by the fact that, in the same manner, the blocking of the rotation of the spacer bar around a mesiodistal axis is not allowed. Also in such case, the twisting moment due to the force that acts on the upper canine is not transmitted to the upper molar and tends to cause a rotation of the canine towards the interior of the mouth, which in the jargon is termed torque.

A further drawback is given by the fact that such devices are not very versatile and poorly adaptable to all patients, since they are produced in standard dimensions and moreover the spacer bar cannot be interchanged with respect to the corresponding support body. Therefore, in the event in which a device is purchased with incorrect sizes, it is not possible to modify it in order to adapt it to the mouth of the patient, but it is instead necessary to purchase it again, with a consequent increase of the already-high costs.

A further drawback is given by the fact that the aforesaid devices are not easy to install, since during the fixing of the support body, the spacer bar is already necessarily associated therewith and can create obstacles for the orthodontist who installs the device.

In order to resolve several of the abovementioned drawbacks, the orthodontic device described in the patent EP 1649824 is for example known. Such device was modified with respect to the preceding by removing, from the spherical hinging portion, two opposite caps so as to obtain a spherical articulation with two flat faces. In particular, such hinging portion is inserted in the housing seat of the support body.

An analogous solution is also shown in the documents US 2020163742 and US 2022192791.

Also the latter known solution has in practice shown that it does not lack drawbacks and in particular such device does not solve all of the abovementioned problems.

Indeed, the coupling between the hinging portion and the support body must still occur before the sale to the final user.

In addition, even if such shaping of the hinging portion allows reducing the freedom of rotation of the spacer bar in an occlusogingival direction and around the mesiodistal axis, there is still the non-negligible rotation angle.

Also known is a further orthodontic device, described in the document US 2020085539, which has an orthodontic bar provided with a hinging portion shaped as a pin and inserted in a housing seat shaped such to allow the rotation around three rotation axes. In particular, the orthodontic bar can rotate around a first axis defined by the extension of the pin-shaped hinging portion, around a second axis defined by the extension of the central portion of the orthodontic bar and a third axis perpendicular to the first two.

Such device has the same drawbacks as the orthodontic devices described above. Indeed, first of all, the hinging portion must necessarily be placed within the housing seat and removably constrained thereto at the time of installation in order to allow all the internal walls of the housing seat to limit the rotations of the orthodontic bar around the respective above-indicated axes.

Secondly, the possible rotations around the second and the third axis, even if expressly desired in this case, cause the abovementioned problems of torque and extrusion of the canine.

### Summary of the invention

The present invention pertains to an orthodontic device and an orthodontic kit for treating malocclusions according to the respective independent claims 1 and 13. Advantageous aspects of the invention are defined in the dependent claims.

In this situation, the problem underlying the present invention is to eliminate the drawbacks of the above-described prior art, by providing an orthodontic device and an orthodontic kit in the treatment of malocclusions, which allow decreasing or preventing the undesired risk of extrusion of the canine in such treatment.

A further object of the present invention is to provide an orthodontic device and an orthodontic kit, which allow decreasing or preventing the undesired risk of torque of the canine in such treatment.

A further object of the present invention is to provide an orthodontic device and an orthodontic kit, which more generally allow decreasing or preventing the tip, torque, extrusion, intrusion, distalization movements between the two teeth, to which the device is fixed.

A further object of the present invention is to provide an orthodontic device and an orthodontic kit, which allow an improved and more effective distribution of the forces.

A further object of the present invention is to provide an orthodontic device and an orthodontic kit, which allow a greater versatility of use and can be personalized for the various patients to be treated.

A further object of the present invention is to provide an orthodontic device and an orthodontic kit, which allow a greater ease of installation.

A further object of the present invention is to provide an orthodontic device and an orthodontic kit, which are inexpensive and simple to attain.

### Brief description of the drawings

The technical characteristics of the invention, according to the aforesaid objects, are clearly seen in the contents of the below-reported claims and the advantages thereof will be more evident from the following detailed description, made with reference to the enclosed drawings, which represent several merely exemplifying and non-limiting embodiments of the invention, in which:

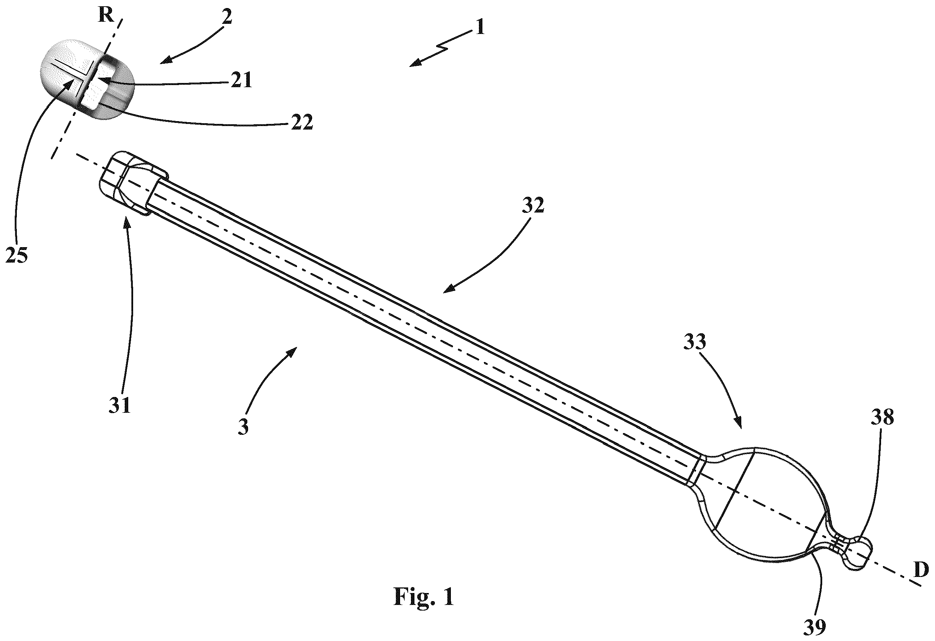

- figure 1 shows a top view of an orthodontic device in accordance with the preferred embodiment of the invention with a support body and a spacer bar that are disassembled;
- figures 2a and 2b respectively show a side view of a first embodiment variant and of a second embodiment variant of the spacer bar of the device of figure 1;
- figures 3a and 3b show a top view of the hinging portion of the spacer bar respectively in accordance with the first and the second embodiment variant;
- figures 4a and 4b show a vertical section view of a detail of the device of figure 1, respectively in accordance with the first and the second embodiment variant of the spacer bar;
- figures 5a and 5b show a bottom horizontal section view of a detail of the device of figure 1, respectively in accordance with the first and the second embodiment variant of the spacer bar;
- figure 6 shows a view of the attachment body of the device of figure 1 from the side of the access mouth of the housing seat;
- figure 7 shows a top view of a detail relative to the support body and to a hinging portion of the spacer bar of the assembled device of figure 1;
- figure 8 shows a vertical section view of the attachment body of figure 6;
- figure 9 shows a side view of the detail of figure 7;
- figure 10 shows a detail of a spacer bar provided with two hooks in accordance with a further embodiment of the device;
- figure 11 shows a schematic view of the device of figure 1 applied to the mouth of a patient, which shows the force generated by an elastic pulling element;
- figure 12 shows a schematic view of the device of figure 10 applied to the mouth of a patient, which shows the forces generated by elastic pulling elements.

### Detailed description of a preferred embodiment

With reference to the enclosed drawings, reference number 1 overall indicates the orthodontic device for treating malocclusions, object of the invention.

The device 1, object of the invention, is advantageously intended to be employed in the field of orthodontics for treating dental malocclusions, in particular in the mandibular skeletal correction so as to remedy Class II malocclusions, and advantageously also Class III malocclusions, of a patient and to obtain a correct ratio between the teeth of the maxilla and the teeth of the mandible.

For such purpose, the device 1 is advantageously intended to be fixed to a first tooth D1, in particular a molar of a semi-upper arch of the mouth of a patient in the case of treatment of Class II malocclusion, and advantageously to a second tooth D2, in particular a canine of the same semi-arch.

Hereinbelow, the use examples will be referred to the treatment of Class II malocclusion. Of course, without departing from the protective scope of the present invention, the orthodontic device 1 can also be used for treating the Class III malocclusion, for example by applying it to the lower arch, in a manner opposite that described herein.

In accordance with the invention, the device 1 is provided with a support body 2, which comprises an attachment base 20 intended to be fixed to the first tooth D1 and on which a housing seat 21 is made.

In addition, the device 1 is provided with a spacer bar 3, intended to be placed to connect between the support body 2 and the second tooth D2. In particular, the spacer bar 3 is rotatably connected to the aforesaid support body 2.

More in detail, the spacer bar 3 comprises a hinging portion 31, rotatably connected to the support body 2 around a rotation axis R, preferably occlusogingival. In addition, the hinging portion 31 is at least partially inserted within the housing seat 21 of the support body 2.

More in detail, the hinging portion 31 of the spacer bar 3 comprises two opposite planar surfaces 34, substantially perpendicular to the rotation axis R and a lateral surface 35, placed to connect the planar surfaces 34.

Of course, it is intended that possibly the planar surfaces 34 can be connected to the lateral surface 35 by curved connector surfaces.

The spacer bar 3 also comprises an elongated central portion 32 mainly extended along an extension direction D, preferably mesiodistal, starting from said hinging portion 31. Preferably, the central portion 32 has curved shape.

In addition, the spacer bar 3 comprises an end portion 33, extended starting from the central portion 32 in opposite position with respect to the hinging portion 31 and intended to be fixed to the second tooth D2. Advantageously, the end portion 33 has elongated shape so as to increase the fixing area to the second tooth D2.

In accordance with the idea underlying present invention, the lateral surface 35 of the hinging portion 31 has at least partially cylindrical shape.

In addition, the housing seat 21 of the support body 2 is at least partially counter-shaped with respect to the hinging portion 31 and preferably substantially to size. According to the claimed invention, the housing seat 21 is shaped such to substantially entirely prevent the rotation of the hinging portion 31 around any axis different from the rotation axis R.

In this manner, the rotation of the hinging portion 31 around an axis different from the rotation axis R, for example around a labial axis, perpendicular to the tooth, remains zero or very small, since it is limited by the interference of the hinging portion 31 with the housing seat 21 partially counter-shaped thereto and preferably substantially to size.

In other words, advantageously, the hinging portion 31 forms, with the housing seat 21, a revolute joint around the rotation axis R. In particular, such revolute joint prevents any rotation of the spacer bar 3 with respect to the support body 2 except for the rotation around the rotation axis R, which is permitted.

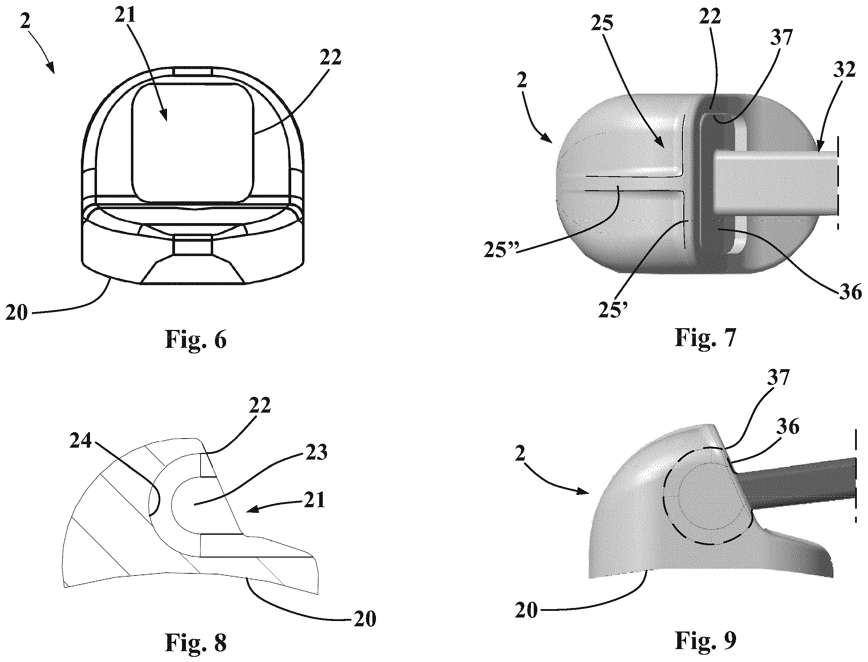

In accordance with the claimed invention, as illustrated in the enclosed figures 6, 7, 8 and 9, the housing seat 21 is internally delimited at least by two abutment surfaces 23, planar and opposite, which face the planar surfaces 34 of the hinging portion 31 and are configured for preventing the rotation of the hinging portion 31 around an axis different from the rotation axis R. In particular, the planar surfaces 34 of the hinging portion 31 are placed substantially in contact with or in abutment against the aforesaid abutment surfaces 23.

For such purpose, advantageously, the distance between the abutment surfaces 23 of the housing seat 21 is substantially equal to the distance between the planar surfaces 34 of the hinging portion 31, i.e. in particular to the length of the hinging portion 31 along the rotation axis R.

Of course, such distances are to be considered net of a minimum clearance dictated by the processing tolerances, and by the need to allow the insertion of the hinging portion 31 in the housing seat 21. For example, such clearance (if present) can at most allow a minimum rotation of the spacer bar 3 in occlusogingival direction and/or around a mesiodistal axis by an angle with width smaller than 20°, preferably with width smaller than 15° and still more preferably with width smaller than 10°.

Advantageously, the housing seat 21 is also internally delimited at least by a slide surface 24, at least partially cylindrical, which is placed to connect between the abutment surfaces 23 and faces the lateral surface 35 of the hinging portion 31. Preferably, the lateral surface 35 of the hinging portion 31 is placed in contact with the slide surface 24 and is adapted to slide on the latter in the rotation around the rotation axis R.

In this manner, the rotation of the hinging portion 31 around an axis different from the rotation axis R, e.g. around a labial axis, is advantageously limited first of all by the abutment between the planar surfaces 34 and the abutment surfaces 23 and secondly by the contact of the lateral surface 35 with the abutment surface 23.

Advantageously, the elimination or minimization of the possibility of rotating around an axis different from the rotation axis R allows distributing any occlusogingival component of a force F applied to the spacer bar 3 in a uniform manner both to the first tooth D1 and to the second tooth D2. In the event in which the second tooth D2 is an upper canine, this factor thus allows considerably reducing the risk of extrusion, since the forces are distributed in an equal manner between the latter and the upper molar. For the same reason, also the risk of torque of the canine is advantageously reduced.

At the same time, the device 1 advantageously and more stably connects the first tooth D1 and the second tooth D2 and consequently allows the uniform treatment of the dental arch part comprised therebetween.

Advantageously, the support body 2 comprises an access mouth 22 starting from which the housing seat 21 is extended. In particular, the access mouth 22 has size equal to or greater than the hinging portion 31 of the spacer bar 3 in order to allow the passage of the hinging portion 31 itself.

In particular, the size of the access mouth 22 is such to freely allow the insertion and the removal of the hinging portion 31 within the housing seat 21. Therefore, when the device 1 is not fixed to the suitable dental arch, the support body 2 and the spacer bar 3 are advantageously removably connected to each other.

In this manner, it is possible to mount the spacer bar 3, by associating it to the support body 2, directly after the fixing of the latter on the first tooth D1, in a manner such to allow a wider maneuvering space and thus allow the orthodontist to have greater ease in the application.

In addition, it is advantageously possible to easily substitute the spacer bar 3 with another, even if different size, in case of need.

In operation, in order to install the device 1 in the mouth of a patient, the support body 2 is first temporarily glued on the first tooth D1, for example by means of a photopolymerization glue that initially is only applied without polymerization.

Subsequently, the spacer bar 3 with the hinging portion 31 is advantageously temporarily inserted in the housing seat 21, in a manner such to verify both the correct positioning of the support body 2, and the correct size of the spacer bar 2, which otherwise can be substituted.

In the event in which the support body 2 is correctly placed on the first tooth D1, the spacer bar 3 is removed and the support body 2 is fixed on the first tooth D1 by photopolymerizing the glue. Otherwise, the support body 2 can be moved in order to bring it into the suitable position, before definitively fixing it.

Subsequently, the spacer bar 3 is newly mounted on the support body 2 and its end portion 33 is fixed to the second tooth D2.

When both the support body 2 and the spacer bar 3 are fixed to the respective first tooth D1 and second tooth D2, the hinging portion 31 remains retained in the housing seat 21.

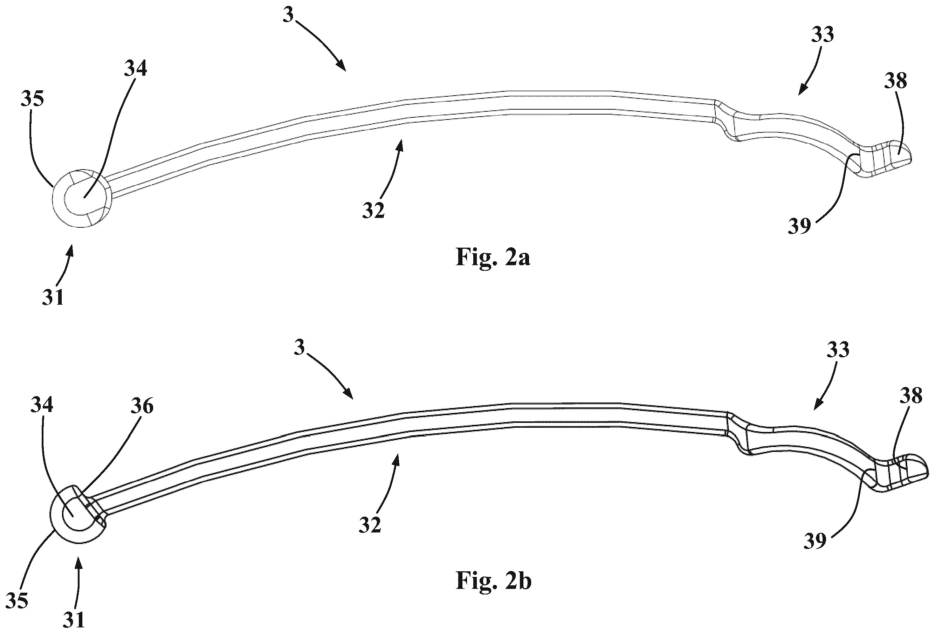

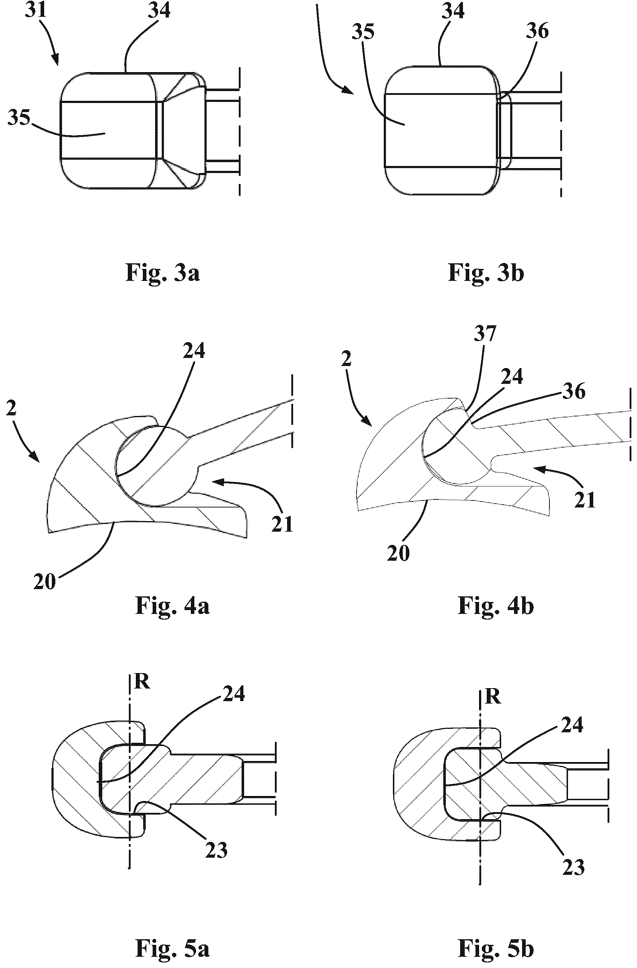

In accordance with a first embodiment variant, illustrated in figures 2a, 3a, 4a and 5a, the hinging portion 31 has substantially cylindrical shape. In such case, the lateral surface 35 is preferably extended all around the hinging portion 31 and the central portion 33 of the spacer bar 3 is advantageously extended therefrom.

In accordance with a second embodiment variant, illustrated in figures 2b, 3b, 4b, 5b, 7 and 9, the hinging portion 31 comprises a closure surface 36, which is connected with the lateral surface 35 by a peripheral edge 37. In such case, the hinging portion 31 advantageously has a cylindrical shape from which a portion parallel to the rotation axis R has been removed. In particular, the closure surface 36 is substantially flat and is extended to continue the lateral surface 35 into the removed cylindrical portion.

Advantageously, the central portion 33 of the spacer bar 3 is extended from the closure surface 36.

In accordance with the second embodiment variant, the hinging portion 31 is placed in the housing seat 21 in at least one operating position in which the peripheral edge 37 of the closure surface 36 is placed at the access mouth 22. In such situation, the entire closure surface 36 is advantageously coplanar with the peripheral edge 37.

Alternatively, in the operating position, the peripheral edge 37 of the closure surface 36, and preferably also the entire closure surface 36, is placed within the housing seat 21.

Advantageously, the second embodiment variant has the advantage that it allows the orthodontist to identify if the spacer bar 3 is placed in the correct operating position, i.e. in particular with its hinging portion 31 completely inserted in the housing seat 21.

In accordance with the preferred embodiment of the present invention, the end portion 33 of the spacer bar 3 comprises at least one hook 38 intended to be associated with an elastic tensioning element.

Advantageously, the end portion 33 of the spacer bar 3 comprises an end edge 39 opposite the hinging portion 31 and advantageously the hook 38 is extended along the extension direction D starting from the aforesaid end edge 39. Preferably, the hook 38 is extended in a direction opposite the hinging portion 31 of the spacer bar 3 and is advantageously substantially symmetric with respect to the extension direction D in order to ensure the possibility of installation in any dental arch. In particular, the hook 38 has spherical form, which has the further advantage of reducing the risk of irritating the oral mucous membranes of the patient in case of rubbing therewith.

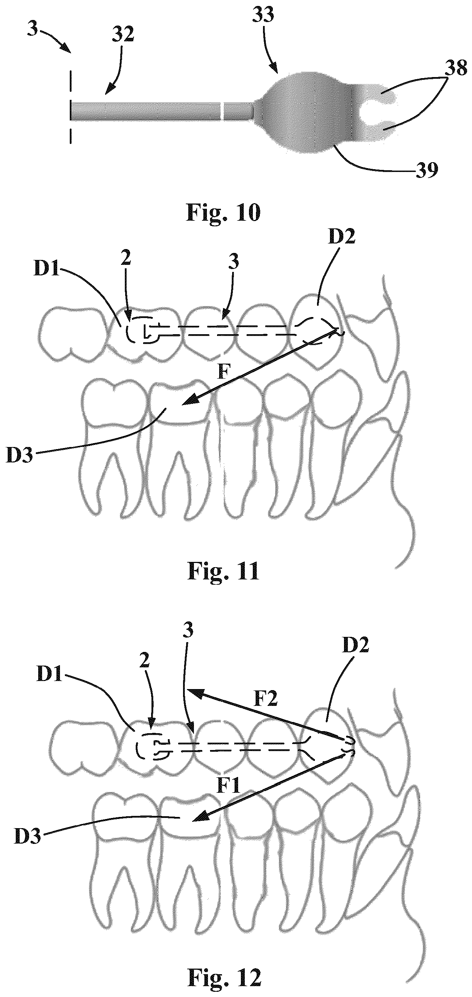

Such configuration advantageously allows increasing the distance, in particular mesiodistal, between the second tooth D2 and a third tooth D3 to which the elastic tensioning element is connected. More in detail, the third tooth D3 is situated on the arch opposite that of the second tooth D2, and in particular it is a lower molar. Consequently, both the force F generated by the elastic tensioning element, and the application tilt with respect to a mesiodistal direction, are advantageously increased, as is illustrated for example in figure 11. Therefore, such configuration also allows increasing the ratio between the component of the force F along the extension direction D (mesiodistal) of the spacer bar 3 and the component of the force F along the rotation axis R (occlusogingival), with respect to a known configuration in which the hook is situated substantially at the center of the end portion 33.

In accordance with a further embodiment, illustrated in figure 10, the end portion 33 comprises two of the aforesaid hooks 38, advantageously shaped with curved form and in particular with facing concavities, i.e. defining a single concavity between them.

In such case, a first of the aforesaid hooks 38 is advantageously intended to be associated with a first elastic tensioning element connected to the third tooth D3, advantageously adapted to generate a first force F1. For example, the first elastic tensioning element can be associated with an attachment element to the third tooth D3 also provided with a respective attachment hook.

Otherwise, a second of the aforesaid hooks 38 is advantageously intended to be associated with a second elastic tensioning element connected to the gums of the arch, on which the second tooth D2 is placed, and is advantageously adapted to generate a second force F2. For example, the second elastic tensioning element can be associated with a gum attachment element, i.e. an orthodontic implant of limited size, also provided with a respective attachment hook.

In this manner, it is possible to balance the occlusogingival components of the forces F1, F2 applied by using the first elastic tensioning element and the second elastic tensioning element, as illustrated for example in figure 12. The latter can be equivalent or even if different type, i.e. with different dimensions or elastic constant.

Of course, without departing from the protective scope of the present invention, it is possible to use the embodiment with two hooks 38 even only with one elastic tensioning element. In such case, the device 1 advantageously allows selecting such hook 38 is more suitable for use, based on the dental arch on which the device 1 itself is positioned.

In order to increase the ease of positioning of the support body 2, the latter comprises at least one marking line 25 parallel to one between the rotation axis R and the extension direction D. In particular, the marking line 25 is made in high-relief, for example during the forming of the same support body 2, and/or via incision, e.g. by means of laser incision.

Preferably, the support body 2 comprises an occlusogingival marking line 25' parallel to the rotation axis R, in particular placed on the support body 2 centrally along the extension direction D.

In addition, the support body 2 advantageously comprises a mesiodistal marking line 25" parallel to the extension direction D, in particular placed on the support body 2 centrally along the rotation axis R. In particular, the mesiodistal marking line 25" is placed at least along a section of the access mouth 22 of the housing seat 21.

Advantageously, the occlusogingival marking line 25' and the mesiodistal marking line 25" are perpendicular to each other and identify a central point of the support body.

Also forming the object of the present invention is an orthodontic device 1 having the characteristics previously described in the preferred embodiment, regardless of the specified form of the hinging portion 31 of the spacer bar 3 (which for example could even have spherical shape) and comprises at least one hook 38 extended starting from the end edge 39 of the end portion 33 along said extension direction D in a direction opposite the hinging portion 31.

In such case, therefore, the orthodontic device 1 according to the invention comprises a support body 2, which comprises an attachment base 20 intended to be fixed to a first tooth D1 and on which a housing seat 21 is made.

In addition, the device 1 comprises a spacer bar 3, intended to be placed to connect between the support body 2 and a second tooth D2, in which the spacer bar 3 itself comprises a hinging portion 31, a central portion 32 and an end portion 33.

In particular, the hinging portion 31 is rotatably connected to the support body 2 around a rotation axis R and is at least partially inserted within the housing seat 21 of the support body 2. In addition, the central portion 32 is elongated and is mainly extended along an extension direction D starting from the hinging portion 31.

In addition, the end portion 33, is extended starting from the central portion 32 in opposite position with respect to the hinging portion 31 and is intended to be fixed to the second tooth D2. In particular, the end portion 33 comprises at least one hook 38 intended to be associated with an elastic tensioning element.

According to the invention, the end portion 33 comprises an end edge 39 opposite the hinging portion 31 and the hook 38 is extended along the extension direction D starting from the end edge 39. Preferably, the hook 38 is extended in opposite sense with respect to the hinging portion 31 and advantageously has spherical shape, in order to minimize the risk of irritating the oral mucous membranes of the patient in case of rubbing therewith.

Such configuration, as stated above, advantageously allows increasing the distance between the second tooth D2 and a third tooth D3 to which the elastic tensioning element is connected. More in detail, the third tooth D3 is situated on the arch opposite that of the second tooth D2, and in particular it is a lower molar. Consequently, both the force F generated by the elastic tensioning element, and the tilt of application with respect to a mesiodistal direction, advantageously increase. Therefore, such configuration also allows increasing the ratio between the component of the force F along the extension direction D (mesiodistal) of the spacer bar 3 and the component of the force F along the rotation axis R (occlusogingival), with respect to a known configuration in which the hook is situated substantially at the center of the end portion 33.

Since the orthodontic device 1 described now can be provided with any other characteristic of the preferred embodiment described above, it will not be further described hereinbelow.

Also forming the object of the present invention is an orthodontic device 1 having the characteristics previously described in the preferred embodiment, regardless of the specified form of the hinging portion 31 of the spacer bar 3 (which could for example also have spherical form) and has a spacer bar 3 with an end portion 33 comprising two hooks 38.

In such case, therefore, the orthodontic device 1 according to the invention comprises a support body 2, which comprises an attachment base 20 intended to be fixed to a first tooth D1 and on which a housing seat 21 is made.

In addition, the device 1 comprises a spacer bar 3, intended to be placed to connect between the support body 2 and a second tooth D2, in which the spacer bar 3 itself comprises a hinging portion 31, a central portion 32 and an end portion 33.

In particular, the hinging portion 31 is rotatably connected to the support body 2 around a rotation axis R and is at least partially inserted within the housing seat 21 of the support body 2. In addition, the central portion 32 is lengthened and is mainly extended along an extension direction D starting from the hinging portion 31.

In addition, the end portion 33 is extended starting from the central portion 32 in opposite position with respect to the hinging portion 31 and is intended to be fixed to the second tooth D2. In particular, the end portion 33 comprises two hooks 38 each intended to be associated with an elastic tensioning element, which is advantageously intended to be connected to a third tooth D3.

More in detail, the hooks 38 are shaped with curved form and in particular with facing concavities, i.e. defining a single concavity between them.

In such case, a first of the aforesaid hooks 38 is advantageously intended to be associated with a first elastic tensioning element connected to the third tooth D3, advantageously adapted to generate a first force F1. For example, the first elastic tensioning element can be associated with an element of attachment to the third tooth D3 also provided with a respective attachment hook.

Otherwise, a second of the aforesaid hooks 38 is advantageously intended to be associated with a second elastic tensioning element connected to the gums of the arch on which the second tooth D2 is placed, and is advantageously adapted to generate a second force F2. For example, the second elastic tensioning element can be associated with a gum attachment element also provided with a respective attachment hook.

In this manner, it is possible to balance and preferably cancel the occlusogingival components of the applied forces F1, F2 by using the first elastic tensioning element and the second elastic tensioning element. The latter can be equivalent or even of different type, i.e. with different size or elastic constant.

Of course, without departing from the protective scope of the present invention, it is possible to use the embodiment with two hooks 38 even only with one elastic tensioning element. In such case, the device 1 advantageously allows selecting such hook 38 is more suitable for use, based on the dental arch on which the device 1 itself is positioned.

Since the orthodontic device 1 described now can be provided with any other characteristic of the preferred embodiment described above, it will not be further described hereinbelow.

Also forming the object of the present invention is an orthodontic kit for treating malocclusions which comprises an orthodontic device 1 of any type described above.

According to the invention, the orthodontic kit comprises at least one support body 2 and a plurality of spacer bars 3 of the orthodontic device 1 of any one of the above-described embodiments. Preferably, the support body 2 and the spacer bars 3 of the kit are disassembled from each other, such to allow the orthodontist to select the suitable the spacer bar 3.

Advantageously, each of the spacer bars 3 is provided with an elongated central portion 32 with length different from that of the other said spacer bars 3.

In this manner, the orthodontic kit advantageously allows not only the interchangeability of the spacer bars 3, but also the possibility to select the spacer bar 3 with the length most suitable for the patient without having to purchase new devices in case of error.

The invention thus conceived therefore attains the pre-established objects.

## Claims

1. Orthodontic device for treating malocclusions, which comprises:
- a support body (2), which comprises an attachment base (20) intended to be fixed to a first tooth (D1) and on which a housing seat (21) is made;
- a spacer bar (3), intended to be placed to connect between the support body (2) and a second tooth (D2); said spacer bar (3) comprises:
- a hinging portion (31), rotatably connected to said support body (2) around a rotation axis (R) and at least partially inserted within the housing seat (21) of said support body (2);
- an elongated central portion (32), mainly extended along an extension direction (D) starting from said hinging portion (31);
- an end portion (33), extended starting from said central portion (32) in a position opposite said hinging portion (31) and intended to be fixed to the second tooth (D2);
wherein the hinging portion (31) of said spacer bar (3) comprises:
- two opposite planar surfaces (34), substantially perpendicular with respect to the rotation axis (R);
- a lateral surface (35), placed to connect the planar surfaces (34);
wherein the lateral surface (35) of said hinging portion (31) has at least partially cylindrical shape;
wherein the housing seat (21) of said support body (2) is at least partially counter-shaped with respect to said hinging portion (31) and substantially to size,
**characterized in that** said housing seat (21) is internally delimited at least by two abutment surfaces (23), planar and opposite, which face the planar surfaces (34) of said hinging portion (31) and are configured for preventing the rotation of said hinging portion (31) around an axis different from said rotation axis (R).

2. Orthodontic device according to claim 1, **characterized in that** said hinging portion (31) forms, with said housing seat (21), a revolute joint around said rotation axis (R).

3. Orthodontic device according to any one of the preceding claims, **characterized in that** said housing seat (21) is internally delimited at least by a slide surface (24), at least partially cylindrical, which is placed to connect between said abutment surfaces (23) and faces the lateral surface (35) of said hinging portion (31).

4. Orthodontic device according to any one of the preceding claims, **characterized in that** the planar surfaces (34) of said hinging portion (31) are placed substantially in contact with or in abutment against the aforesaid abutment surfaces (23).

5. Orthodontic device according to any one of the preceding claims, **characterized in that** the distance between the abutment surfaces (23) of said housing seat (21) is substantially equal to the distance between the planar surfaces (34) of said hinging portion (31).

6. Orthodontic device according to any one of the preceding claims, **characterized in that** said support body (2) comprises an access mouth (22) starting from which said housing seat (21) is extended,
said access mouth (22) having size equal to or greater than the hinging portion (31) of said spacer bar (3) in order to allow the passage of said hinging portion (31).

7. Orthodontic device according to claim 6, **characterized in that** said hinging portion (31) comprises a closure surface (36), which is connected with the lateral surface (35) by a peripheral edge (37),
wherein said hinging portion (31) is placed in said housing seat (21) in at least one operating position in which:
- the peripheral edge (37) of said closure surface (36) is placed at said access mouth (22), or
- the peripheral edge (37) of said closure surface (36) is placed within said housing seat (21).

8. Orthodontic device according to any one of the preceding claims, **characterized in that** said end portion (33) comprises at least one hook (38) intended to be associated with an elastic tensioning element.

9. Orthodontic device according to claim 8, **characterized in that** said end portion (33) comprises an end edge (39) opposite said hinging portion (31),
wherein said hook (38) is extended along said extension direction (D) starting from said end edge (39).

10. Orthodontic device according to claim 8 or 9, **characterized in that** it comprises two of said hooks (38).

11. Orthodontic device according to any one of the preceding claims, **characterized in that** said support body (2) comprises at least one occlusogingival marking line (25') parallel to said rotation axis (R).

12. Orthodontic device according to any one of the preceding claims, **characterized in that** said support body (2) comprises at least one mesiodistal marking line (25") parallel to said extension direction (D).

13. Orthodontic kit for treating malocclusions **characterized in that** it comprises at least one support body (2) and a plurality of spacer bars (3) of the orthodontic device (1) according to any one of the preceding claims.

14. Orthodontic kit according to claim 13, **characterized in that** each of said spacer bars (3) is provided with an elongated central portion (32) with length different from that of the other said spacer bars (3).

## Patentansprüche

1. Orthodontische Vorrichtung zur Behandlung von Malokklusionen, die Folgendes umfasst:
- einen Trägerkörper (2), der eine Befestigungsbasis (20) umfasst, die dazu bestimmt ist, an einem ersten Zahn (D1) fixiert zu werden, und auf dem eine Aufnahme (21) eingerichtet ist;
- eine Abstandsleiste (3), die dazu bestimmt ist, als Verbindung zwischen dem Trägerkörper (2) und einem zweiten Zahn (D2) positioniert zu werden; wobei die genannte Abstandsleiste (3) Folgendes umfasst:
- einen Anlenkabschnitt (31), der um eine Drehachse (R) drehbar mit dem genannten Trägerkörper (2) verbunden und mindestens teilweise in das Innere der Aufnahme (21) des genannten Trägerkörpers (2) eingesetzt ist;
- einen länglichen mittleren Abschnitt (32), der hauptsächlich entlang einer Verlaufsrichtung (D) ausgehend von dem genannten Anlenkabschnitt (31) verläuft;
- einen Endabschnitt (33), der ausgehend von dem genannten mittleren Abschnitt (32) in einer dem genannten Anlenkabschnitt (31) gegenüberliegenden Position verläuft und dazu bestimmt ist, an dem zweiten Zahn (D2) fixiert zu werden;
wobei der Anlenkabschnitt (31) der genannten Abstandsleiste (3) Folgendes umfasst:
- zwei gegenüberliegende ebene Flächen (34), die im Verhältnis zu der Drehachse (R) im Wesentlichen senkrecht sind;
- eine Seitenfläche (35), die als Verbindung der ebenen Flächen (34) positioniert ist;
wobei die Seitenfläche (35) des genannten Anlenkabschnitts (31) mindestens teilweise eine zylindrische Form aufweist;
wobei der Aufnahmesitz (21) des genannten Trägerkörpers (2) mindestens teilweise im Verhältnis zu dem genannten Anlenkabschnitt (31) ein Gegenprofil bildet und im Wesentlichen maßhaltig ist,
**dadurch gekennzeichnet, dass** die genannte Aufnahme (21) im Inneren mindestens durch zwei ebene und gegenüberliegende Anschlagflächen (23) begrenzt wird, die den ebenen Flächen (34) des genannten Anlenkabschnitts (31) gegenüberliegen und darauf ausgelegt sind, die Drehung des genannten Anlenkabschnitts (31) um eine von der genannten Drehachse (R) verschiedene Achse zu unterbinden.

2. Orthodontische Vorrichtung nach Anspruch 1, **dadurch gekennzeichnet, dass** der genannte Anlenkabschnitt (31) mit dem genannten Aufnahmesitz (21) ein Drehgelenk um die genannte Drehachse (R) bildet.

3. Orthodontische Vorrichtung nach einem beliebigen der vorangegangenen Ansprüche, **dadurch gekennzeichnet, dass** der genannte Aufnahmesitz (21) im Inneren durch mindestens eine mindestens teilweise zylindrische Gleitfläche (24) begrenzt wird, die als Verbindung zwischen den genannten Anschlagflächen (23) positioniert ist und der Seitenfläche (35) des genannten Anlenkabschnitts (31) gegenüberliegt.

4. Orthodontische Vorrichtung nach einem beliebigen der vorangegangenen Ansprüche, **dadurch gekennzeichnet, dass** die ebenen Flächen (34) des genannten Anlenkabschnitts (31) im Wesentlichen in Kontakt mit oder gegen die genannten Anschlagflächen (23) anschlagend angeordnet sind.

5. Orthodontische Vorrichtung nach einem beliebigen der vorangegangenen Ansprüche, **dadurch gekennzeichnet, dass** der Abstand zwischen den Anschlagflächen (23) der genannten Aufnahme (21) im Wesentlichen gleich dem Abstand zwischen den ebenen Flächen (34) des genannten Anlenkabschnitts (31) ist.

6. Orthodontische Vorrichtung nach einem beliebigen der vorangegangenen Ansprüche, **dadurch gekennzeichnet, dass** der genannte Trägerkörper (2) eine Zugangsöffnung (22) aufweist, von der aus die genannte Aufnahme (21) verläuft,
wobei die genannte Zugangsöffnung (22) gleich oder größer ist als der Anlenkabschnitt (31) der genannten Abstandsleiste (3), um den Durchgang des genannten Anlenkabschnitts (31) zu gestatten.

7. Orthodontische Vorrichtung nach Anspruch 6, **dadurch gekennzeichnet, dass** der genannte Anlenkabschnitt (31) eine Abschlussfläche (36) umfasst, die mit der Seitenfläche (35) von einem Außenrand (37) aus verbunden ist,
wobei der genannte Anlenkabschnitt (31) in der genannten Aufnahme (21) in mindestens einer Betriebsposition angeordnet ist, in der:
- der genannte Außenrand (37) der genannten Abschlussfläche (36) an der genannten Zugangsöffnung (22) angeordnet ist, oder
- der Außenrand (37) der genannten Abschlussfläche (36) im Inneren der genannten Aufnahme (21) angeordnet ist.

8. Orthodontische Vorrichtung nach einem beliebigen der vorangegangenen Ansprüche, **dadurch gekennzeichnet, dass** der genannte Endabschnitt (33) mindestens einen Haken (38) umfasst, der dazu bestimmt ist, mit einem elastischen Spannelement verbunden zu werden.

9. Orthodontische Vorrichtung nach Anspruch 8, **dadurch gekennzeichnet, dass** der genannte Endabschnitt (33) einen Endrand (39) umfasst, der dem genannten Anlenkabschnitt (31) gegenüberliegt,
wobei der genannte Haken (38) entlang der genannten Verlaufsrichtung (D) ausgehend von dem genannten Endrand (39) verläuft.

10. Orthodontische Vorrichtung nach Anspruch 8 oder 9, **dadurch gekennzeichnet, dass** sie zwei der genannten Haken (38) umfasst.

11. Orthodontische Vorrichtung nach einem beliebigen der vorangegangenen Ansprüche, **dadurch gekennzeichnet, dass** der genannten Trägerkörper (2) mindestens eine okklusogingivale Markierungslinie (25') parallel zu der genannten Drehachse (R) umfasst.

12. Orthodontische Vorrichtung nach einem beliebigen der vorangegangenen Ansprüche, **dadurch gekennzeichnet, dass** der genannte Trägerkörper (2) mindestens eine mesiodistale Markierungslinie (25") parallel zu der genannten Verlaufsrichtung (D) aufweist.

13. Orthodontisches Kit zur Behandlung von Malokklusionen, **dadurch gekennzeichnet, dass** es mindestens einen Trägerkörper (2) und eine Vielzahl von Abstandsleisten (3) der orthodontischen Vorrichtung (1) nach einem beliebigen der vorangegangenen Ansprüche umfasst.

14. Orthodontisches Kit nach Anspruch 15, **dadurch gekennzeichnet, dass** jede der genannten Abstandsleisten (3) mit einem länglichen mittleren Abschnitt (32) versehen ist, der im Verhältnis zu den anderen genannten Abstandsleisten (3) eine andere Länge aufweist.

## Revendications

1. Dispositif orthodontique pour le traitement de malocclusions, comprenant :
- un corps de support (2), qui comprend une base de fixation (20) destinée à être fixée à une première dent (D1) et sur laquelle est obtenu un siège de logement (21) ;
- une barre d'écartement (3), destinée à être placée comme raccordement entre le corps de support (2) et une seconde dent (D2) ; ladite barre d'écartement (3) comprenant
- une partie d'articulation (31), reliée de manière pivotante audit corps de support (2) autour d'un axe de rotation (R) et insérée au moins partiellement à l'intérieur du siège de logement (21) dudit corps de support (2) ;
- une partie centrale (32) allongée, s'étendant principalement le long d'une direction de développement (D) à partir de ladite partie d'articulation (31) ;
- une partie d'extrémité (33), s'étendant à partir de ladite partie centrale (32) dans une position opposée à ladite partie d'articulation (31) et destinée à être fixée à la seconde dent (D2) ;
où la partie d'articulation (31) de ladite barre d'écartement (3) comprend :
- deux surfaces planes (34) opposées, sensiblement perpendiculaires à l'axe de rotation (R) ;
- une surface latérale (35), placée comme raccordement entre les surfaces planes (34) ;
où la surface latérale (35) de ladite partie d'articulation (31) est de forme au moins partiellement cylindrique ;
où le siège de logement (21) dudit corps de support (2) est au moins partiellement en contre-forme par rapport à ladite partie d'articulation (31) et sensiblement adapté,
**caractérisé en ce que** ledit logement (21) est délimité en son sein par au moins deux surfaces de butée (23), planes et opposées, qui font face aux surfaces planes (34) de ladite partie d'articulation (31) et sont configurées pour empêcher la rotation de ladite partie d'articulation (31) autour d'un axe différent dudit axe de rotation (R).

2. Dispositif orthodontique selon la revendication 1, **caractérisé en ce que** ladite partie d'articulation (31) forme avec ledit siège de logement (21) une paire rotoïdale autour dudit axe de rotation (R).

3. Dispositif orthodontique selon l'une quelconque des revendications précédentes, **caractérisé en ce que** ledit siège de logement (21) est délimité en son sein par au moins une surface de glissement (24), au moins partiellement cylindrique, qui est placée comme raccordement entre lesdites surfaces de butée (23) et qui fait face à la surface latérale (35) de ladite partie d'articulation (31).

4. Dispositif orthodontique selon l'une quelconque des revendications précédentes, **caractérisé en ce que** les surfaces planes (34) de ladite partie d'articulation (31) sont disposées sensiblement en contact avec ou en butée contre lesdites surfaces de butée (23).

5. Dispositif orthodontique selon l'une quelconque des revendications précédentes, **caractérisé en ce que** la distance entre les surfaces de butée (23) dudit siège de logement (21) est sensiblement égale à la distance entre les surfaces planes (34) de ladite partie d'articulation (31).

6. Dispositif orthodontique selon l'une quelconque des revendications précédentes, **caractérisé en ce que** ledit corps de support (2) comprend une ouverture d'accès (22) à partir de laquelle s'étend ledit siège de logement (21),
ladite ouverture d'accès (22) est d'une taille égale ou supérieure à la partie d'articulation (31) de ladite barre d'écartement (3) afin de permettre le passage de ladite partie d'articulation (31).

7. Dispositif orthodontique selon la revendication 6, **caractérisé en ce que** ladite partie d'articulation (31) comprend une surface de fermeture (36), qui est reliée à la surface latérale (35) par un bord périphérique (37),
où ladite partie d'articulation (31) est disposée dans ledit siège de logement (21) dans au moins une position de fonctionnement dans laquelle :
- le bord périphérique (37) de ladite surface de fermeture (36) est disposé au niveau de ladite ouverture d'accès (22), ou
- le bord périphérique (37) de ladite surface de fermeture (36) est disposé à l'intérieur dudit siège de logement (21).

8. Dispositif orthodontique selon l'une quelconque des revendications précédentes, **caractérisé en ce que** ladite partie d'extrémité (33) comprend au moins un crochet (38) destiné à être associé à un élément élastique de mise sous tension.

9. Dispositif orthodontique selon la revendication 8, **caractérisé en ce que** ladite partie d'extrémité (33) comprend un bord d'extrémité (39) opposé à ladite partie d'articulation (31), où ledit crochet (38) s'étend le long de ladite direction de développement (D) à partir dudit bord d'extrémité (39).

10. Dispositif orthodontique selon la revendication 8 ou 9, **caractérisé en ce qu'**il comprend deux desdits crochets (38).

11. Dispositif orthodontique selon l'une quelconque des revendications précédentes, **caractérisé en ce que** ledit corps de support (2) comprend au moins une ligne de repérage occluso-gingival (25') parallèle audit axe de rotation (R).

12. Dispositif orthodontique selon l'une quelconque des revendications précédentes, **caractérisé en ce que** ledit corps de support (2) comprend au moins une ligne de repérage mésio-distale (25") parallèle à ladite direction de développement (D).

13. Kit orthodontique pour le traitement de malocclusions **caractérisé en ce qu'**il comprend au moins un corps de support (2) et une pluralité de barres d'écartement (3) du dispositif orthodontique (1) selon l'une quelconque des revendications précédentes.

14. Kit orthodontique selon la revendication 15, **caractérisé en ce que** chacune desdites barres d'écartement (3) est pourvue d'une partie centrale (32) allongée ayant une longueur différente de celle des autres barres d'écartement (3).
